# EUROPEAN PATENT SPECIFICATION

(11) **EP 1 852 731 B1**
(45) Date of publication and mention of the grant of the patent: **25.05.2011**
(21) Application number: 06290726.6
(22) Date of filing: 05.05.2006
(51) Int. Cl.: G02F 1/13, G09G 3/00

(54) **Dual-panel display panel, flat-panel display employing a dual-panel display panel, and method of showing images after the flat-panel display is turned off**
Doppelbildschirmanzeige, Flachbildschirm mit einer Doppelbildschirmanzeige und Verfahren zur Bildanzeige nach Abschalten des Flachbildschirms
Panneau d'affichage à double panneau, affichage à panneau plat utilisant un panneau d'affichage à double panneau et procédé montrant les images après que l'affichage à panneau plat soit arrété

(43) Date of publication of application: 07.11.2007
(73) Proprietor: ACER INCORPORATED, Taipei Hsien 221 (TW)
(72) Inventor: Huang, Chao-Shih, Sijhih City, Taipei County (TW); Lin, Yung-Jen, Sijhih City, Taipei County (TW)
(74) Representative: Loisel, Bertrand

(56) References cited:
- EP-A- 0 516 076
- WO-A-2004/049051
- US-A1- 2002 176 041
- US-A1- 2004 012 836
- US-A1- 2006 088 667
- US-B1- 6 392 725

## Description

### BACKGROUND OF THE INVENTION

### Field of Invention

The present invention relates to a display panel, more specifically, to a dual-panel display panel and a flat-panel display employing the dual-panel display panel, and a method of displaying images after the flat-panel display is turned off.

### Related Art

CRT(Cathode Ray Tube) has been widely used for TV screens, measuring devices and information terminals for a long time. However, the size and weight of CRT cannot meet with the increasing demand for lightweight and small-size displays. Therefore, small-size displays such as LCD (Liquid Crystal Display), PDP (Plasma Display Panel) and ELD (Electro-Luminescence Display) have been widely adopted to replace CRT.

At present, thin flat-panel displays have been applied to monitors of airplanes or spaceships, notebook computers, desktop computers, and large-size monitors. The demand for thin flat-panel displays has been on the increase.

Further, with an increasing demand for large-size TV's and the greater flexibility for home decoration that they provide, thin flat-panel displays have become a popular option for TV-buyers. However, as the thin flat-panel displays have become larger and larger, when the TV is turned off, the darkness of the display may not be compatible with the decoration of the house. Particularly, when a large-size wall TV is turned off, the large area of darkness may feel weird. Take LCD TV as an example, when the TV is turned off, the display loses the voltage that aligns the crystals. As a result, light cannot pass through the liquid crystal layer, thus the display becomes totally dark.

Therefore, a newly designed flat-panel display is expected to solve the problems described above.

### SUMMARY OF THE INVENTION

In order to solve the problems described above, the objectives of the present invention are to provide a dual-panel display panel, a flat-display panel employing the dual-panel display panel, and a method of showing images on the flat-panel display after the display is turned off., and to enable the user to select an image to be displayed on the flat-panel display after the display is turned off.

As described above, the flat-panel display may still show an image, which may be selected at will, after the display is turned off. The operation is power saving. A TV with the flat-panel display could also serve as a decorative piece that matches other decorations in the room instead of being just a TV.

In order to achieve the above objectives, the present invention provides a dual-panel display panel including a first display panel and a second display panel located on the first display panel, wherein the second display panel includes a second lower plate having a plurality of thin-film transistors and a second upper plate having transparent electrodes. A cholesteric liquid crystal layer is formed between the second lower plate and the second upper plate.

The present invention further provides a method for showing images on a flat-panel display after the flat-panel display is turned off. The flat-panel display includes a dual-panel display panel having a first display panel and a second display panel formed on top of the first display panel, wherein the second display panel has a cholesteric liquid crystal layer. The method comprises the following steps: obtaining and saving the image displayed on the first display panel according to a user's instruction, and then obtaining and displaying one of the saved images on the second display panel.

According to the present invention, the first display panel and the second display panel could have the same resolution.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIG. 1 is a perspective view of a dual-panel display panel according to an embodiment of the present invention.
FIG. 2 is a cross-sectional view of a flat-panel display comprising the dual-panel display panel shown in Fig. 1 according to the first embodiment of the present invention.
FIG. 3 is a cross-sectional view a flat-panel display comprising the dual-panel display panel shown in Fig. 1 according to the second embodiment of the present invention.
FIG. 4 is a flow chart illustrating a method for showing images after a flat-panel display according to an embodiment of the present invention is turned off.

### DETAILED DESCRIPTION OF THE INVENTION

The flat-panel display commonly used at present usually includes only one display panel for showing videos or images. The display panel may be of various types, such as TFT-LCD (Thin Film Transistor Liquid Crystal Display), PDP (Plasma.Display Panel), Light Emitting Diode Display, ELD (Electro-Luminescence Display), or FED (Field Emission Display).

The idea of the present invention is to provide another TFT-LCD panel as a second display panel on top of the first display panel that shows videos or images, to thereby form a dual-panel display panel or a more advanced flat-panel display.

The second TFT-LCD panel uses cholesteric liquid crystals as the crystal material, which is bistable (power-saving) and has 360-degree visibility. The second display panel has a second control circuit (not shown in the drawing) separated from the first display panel. When a user uses the flat-panel display showing videos or images, the cholesteric liquid crystal layer (not shown in the drawing) may be set to the open status to thereby not affect the display of the first display panel. Before turning off the TV, the user may pre-select an image and save it, and display the image on the second display panel by controlling the second control circuit. By means of this configuration, the flat-panel display of the present invention may still display pictures or images even after it is turned off.

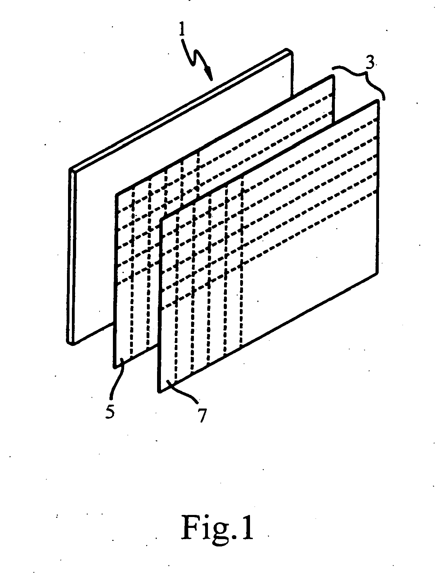

FIG. 1 is a perspective view of a dual-panel display panel according to an embodiment of the present invention.

For simplicity, the figure only shows the first display panel 1, and a second display panel 3 formed on the first display panel 1. The second display panel 3 includes the second lower plate 5 and the second upper plate 7, with a liquid crystal layer 25 between them. The liquid crystal layer 25 may be made from cholesteric liquid crystals.

As stated above, at present there are many different types of display panels, which cannot be described one by one here. In exemplary embodiments of the present invention, a second display panel including a cholesteric liquid crystal layer may be combined with a first display panel, such as the commonly used LCD or PDP, to form a dual-panel display panel or a more advanced flat-panel display. Although exemplary embodiments of the present invention only use LCD or PLD as an example for the first display panel, the exemplary embodiment should meet the requirements for the best mode during examination and enforcement.

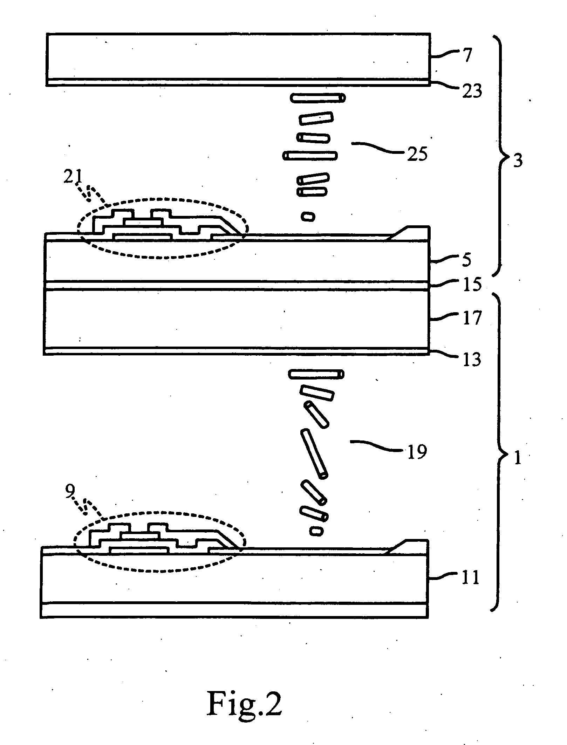

FIG. 2 is a cross-sectional view of a flat-panel display comprising the dual-panel display panel shown in Fig. 1 according to the first embodiment of the present invention.

As shown in Fig. 2, an exemplary embodiment of the present invention includes a first display panel 1, which is an LCD display, and a second display panel 3. The first display panel includes a first lower plate 11 having thin-film transistors 9, and a second upper plate 17 having transparent electrodes 13 and a polarizing plate 15. A liquid crystal layer 19 lies between the first upper plate 17 and the first lower plate 11.

The second display panel 3 formed on the first display panel 1 is a liquid crystal display panel, which includes the second lower plate 5 having thin-film transistors 21, and the second upper plate 7 having transparent electrodes 23. The second lower plate 5 is connected to the first display panel 1. A liquid crystal layer 25 lies between the second upper plate 7 and the second lower plate 5. The crystal layer 25 is made from cholesteric liquid crystals.

The first display panel 1 and the second display panel 3 have corresponding first control circuit and second control circuit respectively (not shown in the drawings).

The integration of the cholesteric liquid crystal layer 25 and the first display panel 1 requires that their resolutions match, so that the thin-film transistor 21 of the second lower plate 5 and the thin-film transistor 9 of the first lower plate correspond to each other.

When the resolutions of the first display panel and the second display panel do not match, the image produced through the first display panel 1 and the corresponding control circuit needs to be converted to comply with the resolution of the second display panel 3. The conversion may be performed by a converting device or a software program.

Further, the first upper plate 17, the second lower plate 5 and the second upper plate 7 are all transparent in order for the first display panel 1 and the second display panel 3 to show the images.

A main controller (not shown in the drawings) is provided according to exemplary embodiments of the present invention. The main controller connects to a first control circuit (not shown in the drawings) and a second control circuit (not shown in the drawings) or is combined with the two circuits to form one single circuit. When the first display panel is turned on, the main controller controls the second control circuit (not shown in the drawings) to adjust the cholesteric liquid crystal layer to open status to let light pass through, and enables the user to select an image from the images shown on the first display panel or saved in a memory device for display on the second display panel.

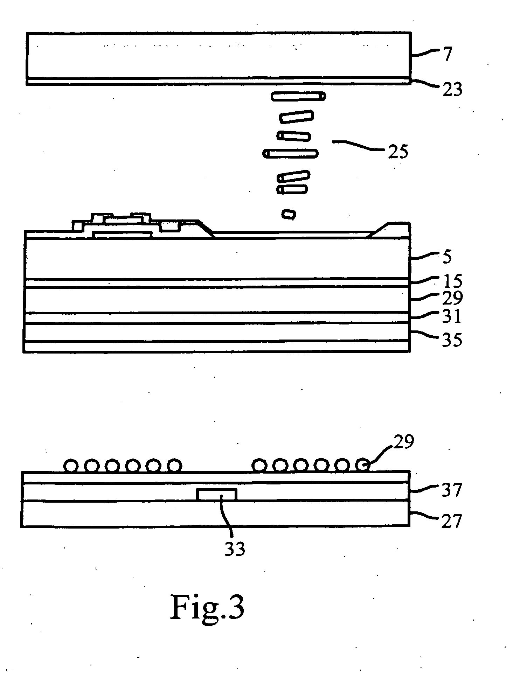

FIG. 3 is a cross-sectional view a flat-panel display comprising the dual-panel display panel shown in Fig. 1 according to the second embodiment of the present invention.

As shown in Fig. 3, another exemplary embodiment of the present invention includes a first display panel 1, which is DC type PDP, and a second display panel 3. The first display panel 1 includes a first lower plate 27 and a first upper plate 29. The electrode 31 on the upper plate 29 and the electrode 33 on the first lower plate 27 are arranged in a crisscross pattern. The first upper plate 29 has dielectrics 35, and the first lower plate 27 has dielectrics 37. The dielectrics 37 on the first lower plate 27 further have a fluorescent material thereon.

Similarly, the second display panel 3 formed on the first display panel 1 is a liquid crystal display panel, including a second lower plate 5 having thin-film transistors 21 and the second upper plate 7 having transparent electrodes 23. The second lower plate 5 is adjacent and connected to the first display panel 1. Between the second upper plate 7 and the second lower plate 5 is a liquid crystal layer 25, which is made from cholesteric liquid crystals.

Further, the first display panel 1 and the second display panel 3 have corresponding first control circuit and second control circuit respectively (not shown in drawings). A main controller (not shown in drawings) may be connected to the first control circuit and the second control circuit or be combined with them to form a single circuit. When the first display panel 1 is turned on, the main controller controls the second control circuit to adjust the cholesteric liquid crystal layer 25 of the second display panel 3 to the open status to let light pass through, and enables the user to select an image from the images shown on the first display panel or saved in a memory device for display on the second display panel 3.

The resolutions of the cholesteric liquid crystal layer 25 and the first display panel 1 need to match so that the thin-film transistors 21 of the second lower plate 5 correspond to the X-Y crossly arranged electrodes 31 and 33 of the first upper plate 29 and the first lower plate 27 respectively. When the resolutions of the first display panel 1 and the second display panel 3 do not match, a converter may be used to adjust the resolution of the image produced from the first display panel 1 and the corresponding control circuit in order to match the resolution of the second display panel 3.

If the thin-film transistors of the flat-panel display cause electromagnetic interference, the thin-film transistors of the cholesteric liquid crystal layer must be reversely adjusted.

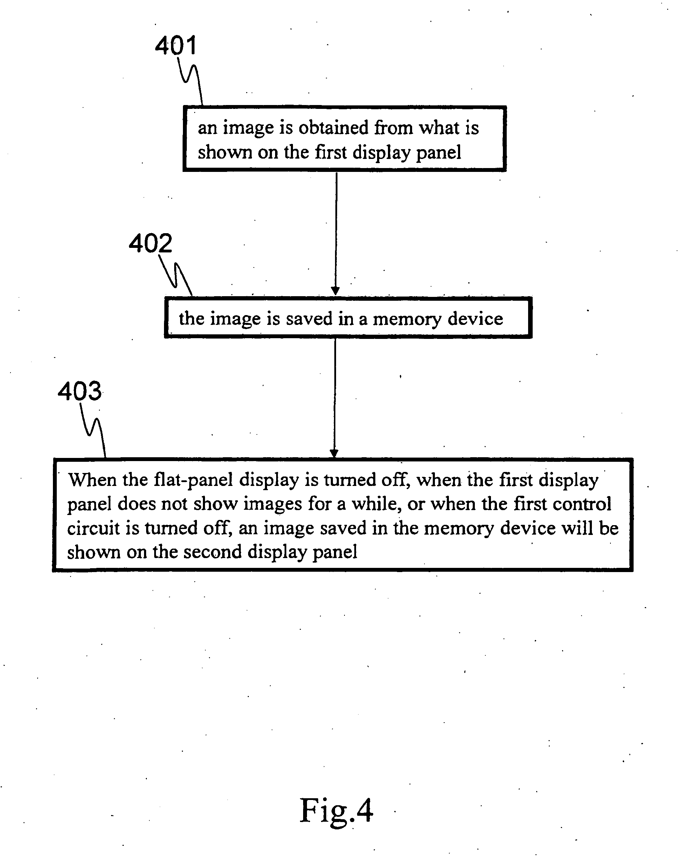

Next, a method for showing images after the flat-panel display of the embodiment is turned off is described. A flowchart of Fig. 4 shows the method for showing image after the flat-panel display shown in Fig. 2 is turned off. First, when the flat-panel display shown in Fig. 2 is in use, during which the second control circuit is turned off and the cholesteric liquid crystal layer is at the open status, an image is obtained from the first display panel 1. The source of the images may be a card reader, a general media (such as a TV set and/or a DVD/VCD player), or a digital camera (Step 401). Then, the image is saved in a memory device, which may be installed either within or outside of the flat-panel display (Step 402). When the flat-panel display is turned off, when the first display panel 1 does not show images for a while, or when the first control circuit is turned off, an image saved in the memory device will be shown on the second display panel 3 (Step 403). When no power is provided, the image will still show on the flat-panel display because of the bistable characteristic of cholesteric liquid crystals.

The images saved in the memory device may be an image obtained from the images shown on the flat-panel display, or an image obtained from a image memory device. The image memory device may be a walkman, SD card or other device for saving pictures or images.

From the description above, when the flat-panel display is in use, the thin-film transistors of the cholesteric liquid crystals will be turned off, thus cholesteric liquid crystal layer is on the open status. Because the cholesteric liquid crystals are characterized by 360-degree visibility, the normal function of the flat-panel display will not be affected. Further, when the flat-panel display is turned off or when the first display panel does not show images for a while, the main controller may control the second display panel to show an image saved in the memory device. Because of the bistable characteristic of cholesteric liquid crystals, when power is not provided, the image selected will be still show on the display panel. The image may be pre-selected or selected randomly.

As described above, the flat-panel display according to the exemplary embodiments of the present invention can become a beautiful picture instead of a dark and dull scene after the flat-panel display is turned off.

## Claims

1. A dual flat panel display device, comprising:
a first display panel (1);
a second display panel (3) located on the first display panel (1); the second display panel (3) including:
a second lower plate (5) having a plurality of thin film transistor (21) and a second upper plate (7), and a cholesteric liquid crystals layer (25) formed between the second lower plate (5) and the second upper plate (7);
a main controller arranged to control operation of the second display panel according to operation of the first display panel wherein the main controller is arranged to:
control the cholesteric liquid crystal layer to a transmittive status letting light pass through when the first display panel starts and displays images;
While the first display panel is in on mode, save an image which is displayed on said first panel in a memory device,
and control the second display panel to show said saved image using the bistable properties of its cholesteric liquid crystal layer when the first display panel is turned off and when no power is applied to the second display panel.

2. The dual-panel display panel of claim 1, wherein the second lower plate and the second upper plate are transparent.

3. The dual-panel display panel of claim 1, wherein the first display panel is a liquid crystal display panel.

4. The dual-panel display panel of claim 1, wherein the first display panel is a plasma display panel.

5. The dual-panel display panel of claim 1, wherein the first display panel and the second display panel have the same resolution.

6. A method for showing images on a dual flat-panel, wherein the flat-panel display includes a dual-panel display panel having a first display panel and a second display panel, the second display panel having a cholesteric liquid crystal layer and the second display panel being located on the first display panel, the method comprising:
setting the cholesteric liquid crystal layer of the second display panel to an transmittive status letting light pass through when the first display panel is in on mode and displays images; and
When the first display panel is on, save an image which is displayed on said first panel in a memory device
controlling the second display panel to show said saved image using the bistable characteristics of the cholesteric crystal layer when the first display panel is turned off and no power is applied to the second display panel,

7. The method of claim 6 for showing images on a flat-panel display after the flat-panel display is turned off, wherein the first display panel and the second display panel have the same resolution.

8. The method of claim 7 for showing images on a flat-panel display after the flat-panel display is turned off, wherein the step of turning on the second display panel to show an image when the first display panel does not show images comprises:
adjusting the resolution of one of the saved images to comply with the resolution of the second display panel; and
showing the converted image by the second display panel.

9. The dual flat display panel device of claim 1, wherein the resolutions of the first display panel and the second display panel do not match.

10. The dual flat panel display device of claim 1, further comprising a converter, for adjusting the resolution of the saved image to comply with the resolution of the second display panel

## Patentansprüche

1. Doppelflachbildschirm-Vorrichtung, mit:
- einem ersten Bildschirm (1);
- einem zweiten Bildschirm (3), der auf dem ersten Bildschirm (1) angeordnet ist; wobei der zweite Bildschirm (3) folgendes aufweist:
- eine mehrere Dünnschichttransistoren (21) aufweisende zweite untere Platte (5) und
- eine zweite obere Platte (7), sowie
- eine zwischen der zweiten unteren Platte (5) und der zweiten oberen Platte (7) ausgebildete cholesterische Flüssigkristallschicht (25);
- eine Hauptsteuerung, die zum Steuern der Funktion des zweiten Bildschirms in Abhängigkeit der Funktion des ersten Bildschirms ausgebildet ist, wobei die Hauptsteuerung dazu ausgebildet ist:
- die cholesterische Flüssigkristallschicht in einen durchlässigen Zustand zu steuern, bei dem Licht hindurchtreten kann, wenn der erste Bildschirm angeschaltet wird und Bilder anzeigt;
- ein auf dem ersten Bildschirm angezeigtes Bild in einer Speichereinrichtung zu speichern, während sich der erste Bildschirm im eingeschalteten Zustand befindet; und
- den zweiten Bildschirm so zu steuern, dass das gespeicherte Bild darauf unter Verwendung der bistabilen Eigenschaften der cholesterischen Flüssigkristallschicht angezeigt wird, wenn der erste Bildschirm ausgeschaltet und der zweite Bildschirm von der Stromzufuhr getrennt ist.

2. Doppelflachbildschirm nach Anspruch 1, worin die zweite untere Platte und die zweite obere Platte transparent sind.

3. Doppelflachbildschirm nach Anspruch 1, worin der erste Bildschirm als Flüssigkristallbildschirm ausgebildet ist.

4. Doppelflachbildschirm nach Anspruch 1, worin der erste Bildschirm als Plasmabildschirm ausgebildet ist.

5. Doppelflachbildschirm nach Anspruch 1, worin der erste Bildschirm und der zweite Bildschirm die selbe Auflösung aufweisen.

6. Verfahren zur Darstellung von Bildern auf einem Doppelflachbildschirm, wobei der Flachbildschirm einen Doppelflachbildschirm mit einem ersten Bildschirm und einem zweiten Bildschirm aufweist, der zweite Bildschirm eine cholesterische Flüssigkristallschicht umfasst und der zweite Bildschirm auf dem ersten Bildschirm angeordnet ist, und wobei das Verfahren folgendes aufweist:
- Versetzen der cholesterischen Flüssigkristallschicht des zweiten Bildschirms in einen durchlässigen Zustand, bei dem Licht hindurchtreten kann, wenn sich der erste Bildschirm im eingeschalteten Zustand befindet und Bilder anzeigt;
- Speichern eines auf dem ersten Bildschirm angezeigten Bildes in einer Speichereinrichtung, wenn sich der erste Bildschirm im eingeschalteten Zustand befindet; und
- Steuern des zweiten Bildschirms so, dass das gespeichert Bild darauf unter Verwendung der bistabilen Eigenschaften der cholesterischen Flüssigkristallschicht angezeigt wird, wenn der erste Bildschirm ausgeschaltet und der zweite Bildschirm von der Stromzufuhr getrennt ist.

7. Verfahren nach Anspruch 6 zur Darstellung von Bildern auf einem Flachbildschirm nach Ausschalten des Flachbildschirms, worin der erste Bildschirm und der zweite Bildschirm die selbe Auflösung aufweisen.

8. Verfahren nach Anspruch 7 zur Darstellung von Bildern auf einem Flachbildschirm nach Ausschalten des Flachbildschirms, worin der Schritt zum Anschalten des zweiten Bildschirms für das Anzeigen eines Bildes dann, wenn der erste Bildschirm keine Bilder zeigt, folgendes umfasst:
- Einstellen der Auflösung von einem der gespeicherten Bilder entsprechend der Auflösung des zweiten Bildschirms; und
- Darstellen des umgewandelten Bildes auf dem zweiten Bildschirm.

9. Doppelflachbildschirm nach Anspruch 1, worin die Auflösung des ersten Bildschirms nicht mit der Auflösung des zweiten Bildschirms übereinstimmt.

10. Doppelflachbildschirm nach Anspruch 1, das ferner einen Wandler zum Einstellen der Auflösung des gespeicherten Bildes in Entsprechung zur Auflösung des zweiten Bildschirms aufweist.

## Revendications

1. Écran plat double, comprenant :
un premier écran d'affichage (1) ;
un second écran d'affichage (3) situé sur le premier écran d'affichage (1) ; le second écran d'affichage (3) comprenant :
une seconde plaque inférieure (5) ayant une pluralité de transistors à film mince (21) et une seconde plaque supérieure (7), et une couche de cristaux liquides cholestériques (25) formée entre la seconde plaque inférieure (5) et la seconde plaque supérieure (7) ;
une unité de commande principale agencée pour commander le fonctionnement du second écran d'affichage selon le fonctionnement du premier écran d'affichage, l'unité de commande principale étant agencée pour :
commander la couche de cristaux liquides cholestériques vers un état transmittif laissant passer la lumière lorsque le premier écran d'affichage démarre et affiche des images ;
lorsque que le premier écran d'affichage est en mode marche, sauvegarder une image qui est affichée sur ledit écran dans un dispositif de mémoire,
et commander le second écran d'affichage pour montrer ladite image sauvegardée en utilisant les propriétés bistables de sa couche de cristaux liquides cholestériques lorsque le premier écran d'affichage est mis à l'arrêt et lorsqu'aucune alimentation n'est appliquée au second écran d'affichage.

2. Écran double selon la revendication 1, dans lequel la seconde plaque inférieure et la seconde plaque supérieure sont transparentes.

3. Écran double selon la revendication 1, dans lequel le premier écran d'affichage est un écran d'affichage à cristaux liquides.

4. Écran double selon la revendication 1, dans lequel le premier écran d'affichage est un écran d'affichage à plasma.

5. Écran double selon la revendication 1, dans lequel le premier écran d'affichage et le second écran d'affichage ont la même résolution.

6. Procédé pour montrer des images sur un écran plat double, dans lequel l'écran plat inclut un écran plat double ayant un premier écran d'affichage et un second écran d'affichage, le second écran d'affichage ayant une couche de cristaux liquides cholestériques et le second écran d'affichage étant situé sur le premier écran d'affichage, le procédé comprenant :
placer la couche de cristaux liquides cholestériques du second écran d'affichage dans un état transmittif laissant passer la lumière lorsque le premier écran d'affichage est en mode marche et affiche des images ; et
lorsque le premier écran d'affichage est en marche, sauvegarder une image qui est affichée sur ledit premier écran dans un dispositif de mémoire ;
commander le second écran d'affichage pour montrer ladite image sauvegardée en utilisant les caractéristiques bistables de la couche de cristaux liquides cholestériques lorsque le premier écran d'affichage est mis à l'arrêt et qu'aucune alimentation n'est appliquée au second écran d'affichage.

7. Procédé selon la revendication 6 pour montrer des images sur un écran plat après la mise à l'arrêt de l'écran plat, dans lequel le premier écran d'affichage et le second écran d'affichage ont la même résolution.

8. Procédé selon la revendication 7 pour montrer des images sur un écran plat après la mise à l'arrêt de l'écran plat, dans lequel l'étape de mise en marche du second écran d'affichage pour montrer une image lorsque le premier écran d'affichage ne montre pas d'image comprend :
régler la résolution de l'une des images sauvegardées pour qu'elle se conforme à la résolution du second écran d'affichage ; et
présenter l'image convertie par le second écran d'affichage.

9. Écran plat double selon la revendication 1, dans lequel les résolutions du premier écran d'affichage et du second écran d'affichage ne concordent pas.

10. Écran plat double selon la revendication 1, comprenant en outre un convertisseur, pour régler la résolution de l'image sauvegardée pour qu'elle se conforme à la résolution du second écran d'affichage.
